# EUROPEAN PATENT APPLICATION

(11) **EP 4 636 999 A1**
(43) Date of publication of application: **22.10.2025**
(21) Application number: 24778197.4
(22) Date of filing: 29.03.2024
(51) Int. Cl.: H02K 5/24

(54) **LINEAR MOTOR, VIBRATION ABSORBER, AND VEHICLE**

(30) Priority: 31.03.2023 CN 202310363457
(71) Applicant: BYD Company Limited, Shenzhen, Guangdong 518118 (CN)
(72) Inventor: LIU, Jianjian, Shenzhen, Guangdong 518118 (CN); YAO, Yuan, Shenzhen, Guangdong 518118 (CN); LIAO, Yinsheng, Shenzhen, Guangdong 518118 (CN); LIU, Lei, Shenzhen, Guangdong 518118 (CN); HUANG, Shiliang, Shenzhen, Guangdong 518118 (CN)
(74) Representative: Wu, Ting
(86) International application number: PCT/CN2024/084676
(87) International publication number: WO 2024/199411

(57) **Abstract**

A linear motor (100), a vibration absorber (200), and a vehicle. The linear motor (100) comprises a stator assembly (1) and a rotor assembly (2). The stator assembly (1) comprises a plurality of electromagnetic modules (10), and each electromagnetic module (10) comprises a stator fixing part and a stator coil. The rotor assembly (2) comprises a plurality of permanent magnets (20), and the permanent magnets (20) and the electromagnetic modules (10) have one-to-one correspondence and are spaced. The plurality of electromagnetic modules (10) are connected to form a first accommodating space, and the rotor assembly (2) is arranged in the first accommodating space, or the plurality of permanent magnets (20) are connected to form a second accommodating space, and the stator assembly (1) is arranged in the second accommodating space.

## Description

### CROSS-REFERENCE TO RELATED DISCLOSURES

The present disclosure claims priority to Chinese Patent Disclosure No. 202310363457.8 filed on March 31, 2023, which is incorporated herein by reference in its entirety.

### FIELD

The present disclosure relates to the field of automotive technologies, and in particular, to a linear motor, a vibration absorber, and a vehicle.

### BACKGROUND

With the development of automobiles, the performance of automotive vibration absorbers has received increasing attention. The performance of vibration absorbers is closely related to the safety, comfort, and operability of vehicles. Traditional hydraulic vibration absorbers are prone to faults such as oil leakage, overheating attenuation, and hydraulic oil degradation. The damping of passive suspensions cannot be adjusted, making it difficult to meet people's needs. Therefore, new types of vibration absorbers have become a hot research topic in the automotive field.

Current new vibration absorbers configure linear motors to actively control the damping force, enabling them to respond proactively according to road conditions, which can effectively enhance the driving stability of the vehicle.

However, the damping force generated by existing vibration absorbers using linear motors is limited.

### SUMMARY

The present disclosure is intended to solve at least one of the technical problems existing in the prior art. To this end, the present disclosure provides a linear motor. This linear motor includes a plurality of motor units working in coordination. The power generated by the linear motor is relatively strong. Moreover, the motor units are integrated into a spatial structure, and the relative movement between the stator and the rotor in the motor units is highly stable. The vibration absorber using this linear motor generates a relatively large damping force. The vibration absorber has a small volume, which is convenient for the arrangement of the vibration absorber, and realizes the lightweight of the entire vehicle, and improves the comfort of the entire vehicle.

Another embodiment of the present disclosure is to propose a vibration absorber.

The present disclosure also proposes a vehicle.

Some embodiments of the linear motor according to the present disclosure include: a stator assembly and a rotor assembly, the stator assembly includes a plurality of electromagnetic modules, and each electromagnetic module includes a stator fixing part and a stator coil, the stator coil is connected to the stator fixing part; the rotor assembly includes a plurality of permanent magnets, and the plurality of permanent magnets and the plurality of electromagnetic modules have one-to-one correspondence and are spaced. The plurality of electromagnetic modules are connected to form a first accommodating space, and the rotor assembly is movably arranged in the first accommodating space; or the plurality of permanent magnets are connected to form a second accommodating space, and the stator assembly is arranged in the second accommodating space.

According to the linear motor of some embodiments of the present disclosure, by arranging a stator assembly with the plurality of electromagnetic modules and a rotor assembly with the plurality of permanent magnets, and the plurality of permanent magnets and the plurality of electromagnetic modules have one-to-one correspondence and are spaced, the linear motor of the present disclosure can provide stronger power and, at the same time, reduce the volume of the linear motor. The inherent structure of the stator assembly and the rotor assembly is utilized to achieve position limiting. The vibration absorber using the linear motor of the present disclosure can generate a large damping force and a large lifting force, thus improving the driving stability of the vehicle. The vibration absorber has a small volume, which can reduce the manufacturing cost, and this is convenient for the arrangement of the vibration absorber. It can also realize the lightweight of the entire vehicle and improve the comfort of the entire vehicle.

In some embodiments, the plurality of stator fixing parts are sequentially connected to form the first accommodating space.

In some embodiments, the stator assembly further includes a connecting plate, the connecting plate is arranged between at least two adjacent stator fixing parts, and the connecting plate is connected to the stator fixing parts to enclose and form the first accommodating space.

In some embodiments, the plurality of connecting plates are arranged, and the connecting plates are arranged between any two adjacent stator fixing parts.

In some embodiments, the stator assembly further includes a hollow housing, the first accommodating space is formed inside the housing, and the housing is provided with a plurality of mounting parts, each of the plurality of the mounting parts is configured to mount the stator fixing part.

In some embodiments, the rotor assembly includes a base, which has a plurality of mounting surfaces, and each of the mounting surfaces is configured to mount the permanent magnets.

In some embodiments, the orthographic projection of the base in the moving direction of the rotor assembly is a polygon.

In some embodiments, the number of the mounting surfaces is three.

In some embodiments, the linear motor further includes a guide assembly for guiding the moving direction of the rotor assembly.

Specifically, the guide assembly includes a first guide component and a second guide component, the first guide component is arranged on the base and located between two adjacent sets of permanent magnets, the second guide component is mounted to the stator assembly or to the housing of the linear motor, and the first guide component and the second guide component are in sliding engagement with each other.

In some embodiments, the base is arranged with a sensor grating and the stator assembly is arranged with a position sensor, the position sensor cooperates with the sensor grating to detect the position of the rotor assembly.

According to some embodiments of the present disclosure, the vibration absorber includes the linear motor as described in any of the above claims, the stator assembly is adapted to be fixed to the vehicle body, and the rotor assembly is adapted to be fixed to the wheel and is movable relative to the stator assembly.

According to the vibration absorber of some embodiments of the present disclosure, by installing the above-mentioned linear motor, the linear motor can actively control the damping force and lifting force of the vibration absorber. When the vehicle travels over a bumpy road and the wheels move upward, the stator assembly provides a magnetic field force to slow down the upward movement speed of the rotor assembly. That is, the linear motor provides a buffering damping force, thereby buffering the impact force transmitted from the wheels to the vehicle body, reducing the impact vibration, and enhancing the stability and comfort of the vehicle during driving. Moreover, the linear motor can provide a lifting force to raise the entire vehicle to the desired height, adjusting the vehicle's posture while increasing the ground clearance, thereby improving the vehicle's off-road performance.

In some embodiments, the vibration absorber further includes an upper mounting seat, a lower mounting seat, and a damping spring, the upper mounting seat is adapted to be fixed to the vehicle body, the lower mounting seat is adapted to be fixed to the wheel, and the two ends of the damping spring are respectively connected to the upper mounting seat and the lower mounting seat.

In some embodiments, the vibration absorber further includes a housing, the stator assembly and the rotor assembly are respectively disposed within the housing, the housing is adapted to be fixed to the vehicle body, and the upper mounting seat is fixed to the bottom of the housing.

In some embodiments, the rotor assembly is fixed to the lower mounting seat to move synchronously with the lower mounting seat.

In some embodiments, the lower end of the housing is provided with a through hole, and the rotor assembly can move to make a part of it protrude out of the through hole.

In some embodiments, further comprising a protective cover, the protective cover is mounted between the upper mounting seat and the lower mounting seat, the internal space of the protective cover is in communication with the through hole, and the part of the rotor assembly protruding out of the through hole is located within the protective cover.

In some embodiments, the upper mounting seat and/or the lower mounting seat is provided with a cushion pad, and the damping spring abuts against the cushion pad.

According to the vehicle of some embodiments of the present disclosure, the vehicle includes a vibration absorber as described above.

According to the vehicle of some embodiments of the present disclosure, by installing the above-mentioned vibration absorber, it can buffer the impact force transmitted from the wheels to the vehicle body, and reduce the impact vibration, and enhance the stability and comfort of the vehicle during driving. By controlling the magnitude of the vibration absorber's damping force, the driving style of the vehicle can be adjusted to enhance driving comfort. In addition, the vibration absorber can provide a lifting force to raise the entire vehicle to the desired height, adjusting the vehicle's posture while increasing the ground clearance, thereby improving the vehicle's off-road performance.

The additional aspects and advantages of the present disclosure are partially described in the following description, and some of which will be apparent from the following description, or may be learned from practices of the present disclosure.

### BRIEF DESCRIPTION OF THE DRAWINGS

The above and/or additional aspects and advantages of the present disclosure will become apparent and readily understood from the description of some embodiments in conjunction with the following drawings, where:
FIG.1 is a schematic structural diagram of the vibration absorber according to the first part of some embodiments of the present disclosure;
FIG.2 is a front view of the vibration absorber according to the first part of some embodiments of the present disclosure;
FIG.3 is a cross-sectional view at A-A in FIG.2;
FIG.4 is a cross-sectional view at B-B in FIG. 2;
FIG.5 is a schematic structural diagram of the vibration absorber according to the second part of some embodiments of the present disclosure;
FIG.6 is a front view of the vibration absorber according to the second part of some embodiments of the present disclosure;
FIG.7 is a cross-sectional view at C-C in FIG.6;
FIG.8 is a side view of the vibration absorber according to the second part of some embodiments of the present disclosure;
FIG.9 is a cross-sectional view at D-D in FIG. 8;
FIG.10 is a schematic diagram of a partial structure of the vibration absorber according to an embodiment of the present disclosure.

Reference signs:
linear motor 100;
vibration absorber 200;
stator assembly 1; electromagnetic module 10; connecting plate 11;
rotor assembly 2; permanent magnet 20; base 21;
housing 3; mounting plate 30;
guide assembly 4; first guide component 41; second guide component 42; third guide component 43; linear bearing 44;
sensor magnetic strip 51; position sensor 52;
upper mounting seat 61; lower mounting seat 62; damping spring 63; protective cover 64; cushion pad 65;
upper support of the vibration absorber 71; lower mounting fork of the vibration absorber 72;

### DETAILED DESCRIPTION

The following provides a detailed description of some embodiments of the present disclosure, along with examples of these embodiments shown in the accompanying drawings. Throughout the drawings, identical or similar reference numerals denote identical or similar components, or components having identical or similar functions. Some embodiments described below with reference to the drawings are merely exemplary, are intended to explain the present disclosure and cannot be construed as a limitation on the present disclosure.

In the description of the present disclosure, it should be understood that the orientation or positional relationships indicated by terms such as "center", "longitudinal", "transverse", "vertical", "width", "thickness", "top", "bottom", "inner", "outer", etc. are based on the orientation or positional relationships shown in the accompanying drawings, and are merely for the convenience of describing the present disclosure and simplifying the description. They do not indicate or imply that the referred device or element must have a specific orientation, be constructed and operated in a specific orientation, and thus should not be construed as a limitation on the present disclosure.

In addition, the terms "first" and "second" are configured to descriptive purposes only and should not be understood as indicating or implying relative importance or implicitly indicating the number of the indicated technical features. Thus, a feature defined as "first" or "second" may explicitly or implicitly includes one or more of the feature. In the description of the present disclosure, the meaning of "plural" is at least two, such as two, three, etc., unless otherwise clearly stipulated and defined.

In the description of the present disclosure, unless otherwise clearly stipulated and defined, the terms "install", "connect", "link", "fix" should be understood in a broad sense. For example, they can mean a fixed connection, a detachable connection, or an integral connection; they can be a mechanical connection , an electrical connection or a connection that allows for mutual communication; they can be directly connected or indirectly connected through an intermediate medium, and can also mean the internal communication between two elements or the interaction relationship between them. For those of ordinary skill in the art, they can understand the specific meanings of the above terms in the present disclosure according to specific circumstances.

In the present disclosure, unless otherwise clearly stipulated and defined, the first feature being "on" or "under" the second feature may mean that the first and second features are in direct contact, or it may also comprise the first and second features not being in direct contact but rather in contact through an additional feature between them. Moreover, the first feature being "above", "over", or "on top of" the second feature may mean that the first feature is directly above or obliquely above the second feature, or merely indicates that the horizontal height of the first feature is higher than that of the second feature.

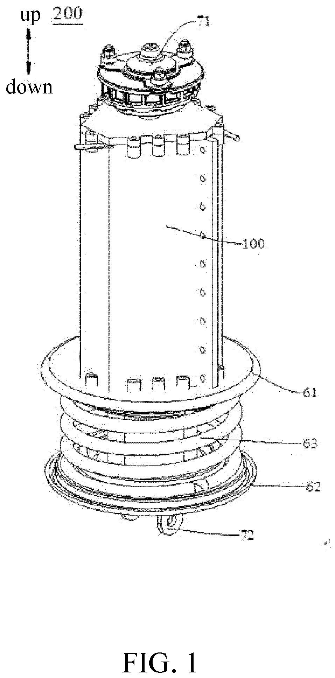

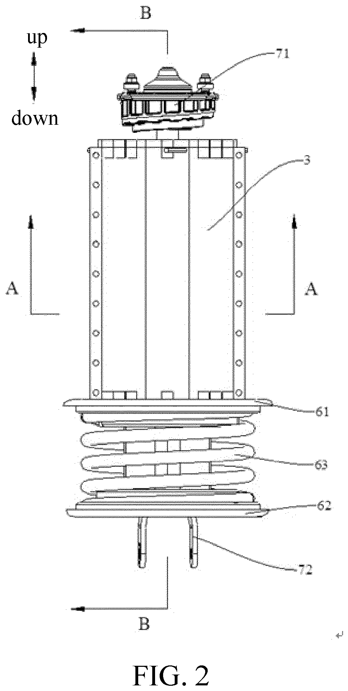

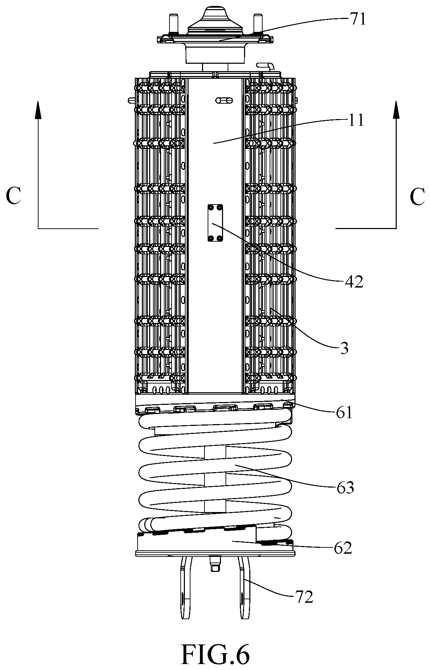

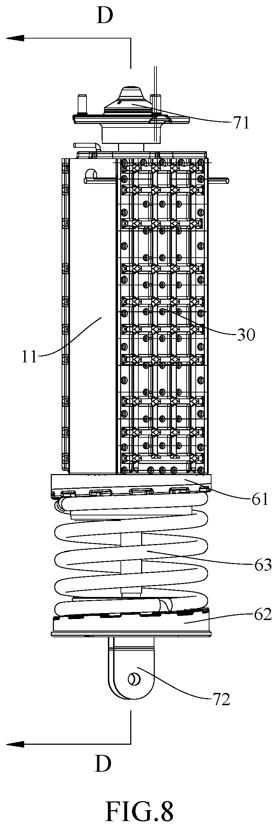

The following will refer to FIG.1 to FIG. 10 to describe the linear motor 100 according to some embodiments of the present disclosure. It can be understood that the linear motor 100 of the present disclosure is applied to the vibration absorber 200. FIG.1 to FIG. 10 are the drawings for describing the vibration absorber 200 using the linear motor 100 of the present disclosure. Referring to these drawings facilitates the description and understanding of the linear motor 100 of the present disclosure.

According to the linear motor 100 of some embodiments of the present disclosure, the linear motor 100 comprises a stator assembly 1 and a rotor assembly 2. The stator assembly 1 is the stationary part of the linear motor 100, and the rotor assembly 2 is the moving part of the linear motor 100. The rotor assembly 2 can perform linear motion relative to the stator assembly 1. The linear motor 100 can directly convert electrical energy into mechanical energy for linear motion.

The stator assembly 1 comprises a plurality of electromagnetic modules 10. Each electromagnetic module 10 comprises a stator fixing part and a stator coil. The stator coil is connected to the stator fixing part. The stator coil is connected to the stator fixing part and is suitable for being connected to an external power supply. When the electromagnetic module 10 is powered, it generates a magnetic field. The rotor assembly 2 comprises a plurality of permanent magnets 20. The permanent magnets 20 can move under the influence of the magnetic field, thereby generating linear motion relative to the electromagnetic modules 10. The direction of movement of the permanent magnets 20 is determined by the direction of the magnetic field generated by the electromagnetic modules 10, and the magnetic field direction of the electromagnetic modules 10 is determined by the direction of the current. That is to say, the movement direction of the permanent magnets 20 can be controlled by controlling the direction of the current. Additionally, adjusting the magnitude of the current can control the strength of the magnetic force generated by the electromagnetic modules 10, thereby controlling the power output of the permanent magnets 20. It can be understood that the process in which the stator generates a magnetic field and the rotor performs linear movement under the influence of the magnetic field is a conventional technology in the field and does not involve the structure of the linear motor 100 of the present disclosure, so it will not be described in detail here.

In the linear motor 100 of the present disclosure, the stator assembly 1 comprises a plurality of electromagnetic modules 10, and the rotor assembly 2 comprises a plurality of permanent magnets 20. A plurality of permanent magnets 20 and a plurality of electromagnetic modules 10 have one-to-one correspondence and are spaced. Therefore, the rotor assembly 2 has a plurality of permanent magnets 20 to provide power. Compared with the linear motor 100 with only one electromagnetic module 10 and one permanent magnet 20, the linear motor 100 of the present disclosure can provide more powerful power. When providing the same power, the volume of the linear motor 100 of the present disclosure is smaller than that of the linear motor 100 with only one electromagnetic module 10 and one permanent magnet 20. Moreover, a plurality of permanent magnets 20 and a plurality of electromagnetic modules 10 are matched in a one-to-one correspondence, so the rotor assembly 2 is evenly stressed, and the movement stability of the rotor assembly 2 is strong.

The plurality of permanent magnets 20 and the plurality of electromagnetic modules 10 are matched in a one-to-one correspondence. Each permanent magnet 20 and its corresponding electromagnetic module 10 forms a motor unit. The linear motor 100 of the present disclosure comprises a plurality of motor units working in coordination. The power generated by the linear motor 100 is strong, and the plurality of motor units are combined into a spatial structure. The relative movement between the stator and the rotor in the motor units is highly stable.

In the linear motor 100 of the present disclosure, the plurality of electromagnetic modules 10 are connected to form a first accommodating space, and the rotor assembly 2 is movably arranged in the first accommodating space. The first accommodating space plays a role in limiting and guiding the rotor assembly 2. Moreover, the plurality of permanent magnets 20 and the plurality of electromagnetic modules 10 have one-to-one correspondence and are spaced. The movement stability of the rotor assembly 2 is relatively high, which can prevent the rotor assembly 2 from lateral offset. In the linear motor 100 of the present disclosure, by connecting the plurality of electromagnetic modules 10 to form the first accommodating space, the inherent structure of the stator assembly 1 and the rotor assembly 2 is utilized to complete certain guiding and limiting functions.

In other embodiments, the plurality of permanent magnets 20 are connected to form a second accommodating space, and the stator assembly 1 is arranged in the second accommodating space. Since the plurality of permanent magnets 20 and the plurality of electromagnetic modules 10 have one-to-one correspondence and are spaced, the stator assembly 1 plays a guiding role for the rotor assembly 2. The movement stability of the plurality of permanent magnets 20 is strong, which can prevent the rotor assembly 2 from lateral offset.

It can be understood that the rotor assembly 2 is movable relative to the stator assembly 1. Therefore, after the rotor assembly 2 is fixed, the stator assembly 1 can generate linear movement relative to the rotor assembly 2. Therefore, in the linear motor 100 of the present disclosure, the plurality of permanent magnets 20 can also be connected to form a second accommodating space, and the stator assembly 1 is movably arranged in the second accommodating space. Similarly, the second accommodating space plays a role in limiting and guiding the stator. Moreover, the plurality of permanent magnets 20 and the plurality of electromagnetic modules 10 have one-to-one correspondence and are spaced. The movement stability of the stator is high, which can prevent the stator from lateral movement offset relative to the rotor. The inherent structure of the stator assembly 1 and the rotor assembly 2 is utilized to complete the limiting function without the need to additionally set a limiting mechanism, which can reduce the weight and manufacturing cost of the linear motor 100.

It can be understood that the linear motor 100 of the present disclosure is applied to the vibration absorber 200 of a vehicle. The linear motor 100 can actively control the damping force or lifting force of the vibration absorber 200 to provide a corresponding damping force according to the road conditions, thereby improving the driving stability of the vehicle. The linear motor 100 of the present disclosure can provide a greater damping force and a greater ultimate peak thrust. The volume and weight of the vibration absorber 200 using the linear motor 100 of the present disclosure are both small. It can also reduce the manufacturing cost of the vibration absorber 200, which is convenient for the arrangement of the vibration absorber 200, and realizes the lightweight of the entire vehicle, and improves the comfort of the entire vehicle.

According to the linear motor 100 of some embodiments of the present disclosure, by arranging the stator assembly 1 with the plurality of electromagnetic modules 10 and the rotor assembly 2 with the plurality of permanent magnets 20, and the plurality of permanent magnets 20 and the plurality of electromagnetic modules 10 have one-to-one correspondence and are spaced, the linear motor 100 of the present disclosure can provide stronger power and, at the same time, reduce the volume of the linear motor 100. The inherent structure of the stator assembly 1 and the rotor assembly 2 is utilized to complete the limiting function without the need to additionally set a limiting mechanism, which can reduce the weight and manufacturing cost of the linear motor 100. The vibration absorber 200 using the linear motor 100 of the present disclosure can generate a large damping force and a large lifting force, thus improving the driving stability of the vehicle. Moreover, the volume and weight of the vibration absorber 200 using the linear motor 100 of the present disclosure are both small. It can reduce the manufacturing cost of the vibration absorber 200, which is convenient for the arrangement of the vibration absorber 200, can realize the lightweight of the entire vehicle, and improve the comfort of the entire vehicle.

In some embodiments of the present disclosure, the plurality of electromagnetic modules 10 are sequentially connected to form a first accommodating space, and the rotor assembly 2 is movably arranged in the first accommodating space. That is, the stator assembly 1 is the relatively stationary part, and the rotor assembly 2 is the relatively moving part. Compared with making the stator assembly 1 the relatively moving part, some embodiments of the present disclosure can avoid the wear on the stator coil and the wires connected to the stator coil caused by the movement of the stator assembly 1, extend the service life of the stator assembly 1, save the manufacturing cost for bundling the wiring harnesses, and reduce the arrangement difficulty.

Unless otherwise specified, the following description of the linear motor 100 of the present disclosure will take some embodiments in which the plurality of electromagnetic modules 10 are sequentially connected to form a first accommodating space and the rotor assembly 2 is movably arranged in the first accommodating space as an example to simplify the description and facilitate the understanding of the solution of the present disclosure.

In some embodiments, the plurality of stator fixing parts in the plurality of electromagnetic modules 10 are sequentially connected to form a first accommodating space, and the rotor assembly 2 is movably arranged in the first accommodating space.

In some embodiments of the present disclosure, the stator coil is disposed outside the first accommodating space, which can prevent the stator coil or the wires connected to the stator coil from interfering with the movement of the rotor assembly 2, and can also avoid the wear on the stator coil or the wires connected to the stator coil. It can improve the movement stability of the rotor assembly 2 and extend the service life of the stator assembly 1.

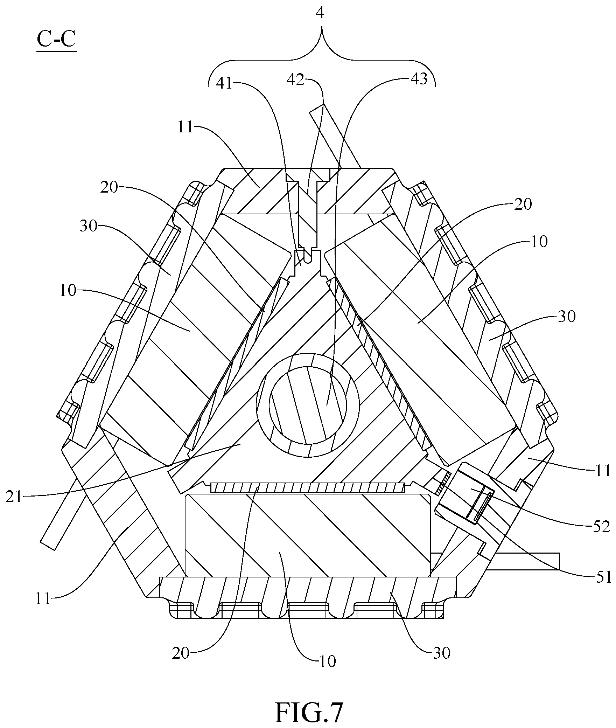

In some embodiments of the present disclosure, as shown in FIG. 7, the stator assembly 1 further comprises a connecting plate 11. The connecting plate 11 is arranged between at least two adjacent stator fixing parts. By setting the connecting plate 11, at least two stator fixing parts are connected. The plurality of stator fixing parts are sequentially connected through the connecting plate 11 to enclose and form a first accommodating space, so as to improve the structural stability of the enclosure formed by the plurality of stator fixing parts.

In some embodiments of the present disclosure, as shown in FIG. 7, there are the plurality of connecting plates 11. The number of the connecting plates 11 is the same as that of the electromagnetic modules 10. The connecting plate 11 is arranged between any two adjacent stator fixing parts. The plurality of electromagnetic modules 10 are connected into a whole through the connecting plate 11. The plurality of connecting plates 11 are connected to the stator fixing parts to enclose and form a first accommodating space.

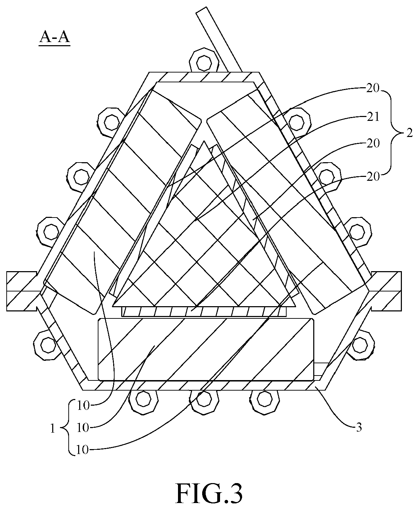

In other embodiments of the present disclosure, as shown in FIG. 3, the stator assembly 1 further comprises a hollow housing 3. The first accommodating space is formed inside the housing 3. The stator assembly 1 and the rotor assembly 2 are disposed inside the housing 3. The housing 3 plays a protective role for the stator assembly 1 and the rotor assembly 2.

The housing 3 is arranged with the plurality of mounting parts, and each mounting part is configured to mount the stator fixing part. The housing 3 connects the plurality of electromagnetic modules 10 into a whole. The plurality of stator fixing parts are mounted on the mounting parts, and a first accommodating space is formed inside the housing 3. Since the housing 3 is hollow, the rotor assembly 2 can still be movably disposed within the first accommodating space formed inside the housing 3, and the housing 3 will not interfere with the movement of the rotor assembly 2.

Optionally, the inner wall of the housing 3 is provided with the plurality of mounting parts, and the stator fixing parts are correspondingly mounted on the mounting parts on the inner wall of the housing 3.

In some embodiments, the mounting parts on the housing 3 can be mounting holes, and the stator fixing parts are suitable for being fixed at the mounting holes.

In some embodiments, as shown in FIG. 7, the housing 3 comprises the plurality of mounting plates 30. The plurality of mounting plates 30 are connected to form the hollow housing 3. Each mounting plate 30 is correspondingly provided with a mounting part.

Optionally, the stator fixing part can be the mounting plate 30. The connecting plate 11 is connected to the mounting plate 30. The plurality of stator fixing parts are sequentially connected through the connecting plate 11 to enclose and form a first accommodating space.

In the first part of some embodiments of the present disclosure, the stator fixing parts are correspondingly mounted on the mounting parts on the inner wall of the housing 3. The plurality of stator fixing parts are connected to each other through the housing 3 to form a first accommodating space.

In the second part of some embodiments of the present disclosure, as shown in FIG. 7, a connecting plate 11 is arranged between any two electromagnetic modules 10. The connecting plate 11 connects the plurality of electromagnetic modules 10 into a whole. In addition, the stator fixing parts are also mounted on the mounting parts of the mounting plate 30. The connecting plate 11 also connects the adjacent mounting plates 30 to each other at the same time, which improves the structural stability of the linear motor 100.

In some embodiments of the present disclosure, in the circumferential direction of the housing 3, a wiring space is provided between two adjacent stator fixing parts and the inner wall of the housing 3. The wires connected to the stator coils extend to the outside of the housing 3 through the wiring space. This avoids the movement interference of the stator coils or the wires connected to the stator coils with the rotor assembly 2, and also prevents the stator coils or the wires connected to the stator coils from being worn. As a result, the movement stability of the rotor assembly 2 can be improved, and the service life of the stator assembly 1 can be prolonged.

In other embodiments of the present disclosure, the plurality of permanent magnets 20 are connected to form a second accommodating space, and the stator assembly 1 is arranged in the second accommodating space. The linear motor 100 further comprises a hollow housing 3. The housing 3 is provided with the plurality of mounting parts, and the stator fixing parts are mounted on the mounting parts. The housing 3 is arranged in the second accommodating space. The housing 3 plays a role in fixing and supporting the stator fixing parts. It connects the plurality of electromagnetic modules 10 into a whole, thereby improving the movement stability of the stator assembly 1 relative to the rotor assembly 2.

In some embodiments of the present disclosure, as shown in FIG. 3 and FIG. 7, the rotor assembly 2 comprises a base 21. The base 21 has the plurality of mounting surfaces, and each mounting surface is configured to mount the permanent magnet 20. The base 21 plays a role in fixing and supporting the permanent magnet 20. The plurality of permanent magnets 20 are connected into a whole through the base 21, which improves the movement stability of the rotor assembly 2.

In some embodiments of the present disclosure, one permanent magnet 20 is correspondingly mounted on each mounting surface.

In some embodiments of the present disclosure, there is a certain angle between the plurality of mounting surfaces of the base 21. The orthographic projection of the base 21 in the moving direction of the rotor assembly 2 is a polygon. Since the permanent magnets 20 are mounted on the mounting surfaces, the orthographic projections of the plurality of permanent magnets 20 are also polygons.

The plurality of permanent magnets 20 and the plurality of electromagnetic modules 10 have one-to-one correspondence. Correspondingly, the orthographic projection of the structure formed by sequentially connecting the plurality of electromagnetic modules 10 in the moving direction of the rotor assembly 2 is also a polygon, and it has the same shape as the polygon of the orthographic projection of the base 21 in the moving direction of the rotor assembly 2. That is to say, the orthographic projection of the first accommodating space formed by connecting the plurality of electromagnetic modules 10 in the moving direction of the rotor assembly 2 is also a polygon. The lateral forces acting on the rotor assembly 2 are balanced, and the rotor assembly 2 can move stably within the first accommodating space whose projection is a polygon, realizing self-guiding and preventing the rotor assembly 2 from lateral offset.

**In** some specific embodiments of the present disclosure, the orthographic projection of the base 21 in the moving direction of the rotor assembly 2 is a regular polygon. Correspondingly, the orthographic projections of the plurality of permanent magnets 20 are also regular polygons, and the orthographic projection of the first accommodating space formed by connecting the plurality of electromagnetic modules 10 is also a regular polygon. The plurality of permanent magnets 20 and the plurality of electromagnetic modules 10 have one-to-one correspondence. Each permanent magnet 20 is subjected to the same magnetic force, which can improve the movement stability of the rotor assembly 2 and prevent the rotor assembly 2 from lateral offset.

**In** other embodiments of the present disclosure, the plurality of permanent magnets 20 are connected to form a second accommodating space, and the stator assembly 1 is arranged in the second accommodating space. The rotor assembly 2 comprises a base 21. The base 21 has the plurality of mounting surfaces, and each mounting surface is configured to mount the permanent magnet 20. The base 21 plays a supporting role for the permanent magnet 20. The plurality of permanent magnets 20 are connected to form the second accommodating space, which is located inside the base 21.

In some specific embodiments of the present disclosure, as shown in FIG. 3 and FIG.7, the number of the mounting surfaces is three, and the orthographic projection of the base 21 in the moving direction of the rotor assembly 2 is an equilateral triangle. Correspondingly, one permanent magnet 20 is mounted on each mounting surface, so the rotor assembly 2 comprises three permanent magnets 20. There are also three electromagnetic modules 10, and the orthographic projection of the structure formed by connecting the three electromagnetic modules 10 is also an equilateral triangle. The triangular structure has strong stability. By setting three mounting surfaces, not only the movement stability of the rotor assembly 2 can be improved, but also the structural strength of the rotor assembly 2 can be enhanced, and the impact resistance of the rotor assembly 2 can be improved.

In other specific embodiments of the present disclosure, the number of the mounting surfaces is four, and two adjacent mounting surfaces are orthogonal. The orthographic projection of the base 21 in the moving direction of the rotor assembly 2 is a square. Correspondingly, there are four permanent magnets 20 and four electromagnetic modules 10. Compared with some embodiments with three mounting surfaces, the linear motor 100 of some embodiments of the present disclosure can provide more powerful power. Moreover, when providing the same power, the volume of the linear motor 100 of the embodiment of the present disclosure is smaller than that of some embodiments with three mounting surfaces.

The above briefly describes two embodiments with three mounting surfaces and four mounting surfaces, which are only for illustrative purposes. After reading the above embodiments, those skilled in the art can obviously understand that applying some embodiments with five or more mounting surfaces to the technical solution of the present disclosure also falls within the protection scope of the present disclosure.

It can be understood that the linear motor 100 of the present disclosure is applied to the vibration absorber 200 of a vehicle. During the driving process of the vehicle, bumps may cause the rotor assembly 2 to shake, which affects the movement of the rotor assembly 2. Therefore, in some embodiments of the present disclosure, the linear motor 100 further comprises a guide assembly 4 for guiding the moving direction of the rotor assembly 2, so as to improve the movement stability of the rotor assembly 2 and prevent the rotor assembly 2 from lateral offset due to the impact on the linear motor 100.

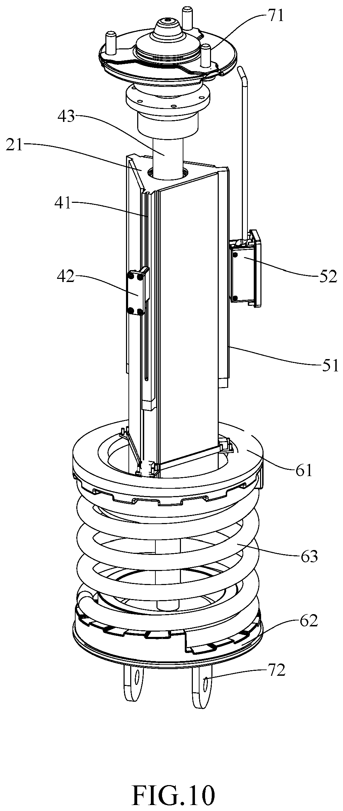

In some embodiments of the present disclosure, as shown in FIG. 7 and FIG. 10, the guide assembly 4 comprises a first guide component 41 and a second guide component 42. The first guide component 41 is arranged on the base 21 and located between two adjacent sets of permanent magnets 20. The second guide component 42 is mounted on the stator assembly 1 or the housing 3 of the linear motor 100. The first guide component 41 and the second guide component 42 are in sliding engagement with each other, so that the rotor assembly 2 can move stably along the guiding direction, preventing the rotor assembly 2 from lateral movement offset due to the impact on the linear motor 100. Optionally, there are a plurality of first guide components 41 and the plurality of second guide components 42, and they have one-to-one correspondence, which improves the guiding effect on the rotor assembly 2 and the movement stability of the rotor assembly 2. The number and specific arrangement positions of the first guide component 41 and the second guide component 42 can be selected according to actual needs.

In some embodiments of the present disclosure, as shown in FIG. 7, the connecting plate 11 is arranged between any two adjacent stator fixing parts. The first guide component 41 is arranged on the base 21 and located between two adjacent sets of permanent magnets 20, and the second guide component 42 is mounted on the connecting plate 11.

In other embodiments of the present disclosure, the stator fixing parts are mounted on the housing 3. The first guide component 41 is arranged on the base 21 and located between two adjacent sets of permanent magnets 20, and the second guide component 42 is mounted on the housing 3 of the linear motor 100.

In some specific embodiments of the present disclosure, as shown in FIG. 7 and FIG.10, the first guide component 41 is configured as a guide groove extending along the moving direction of the rotor assembly 2. The guide groove is arranged on the base 21 and located between two adjacent sets of permanent magnets 20. The second guide component 42 comprises a guide block, which is in sliding engagement in the guide groove. The second guide component 42 also comprises a mounting seat, and the guide block is fixedly arranged on the mounting seat. The mounting seat is suitable for fixed connection to the connecting plate 11 or the housing 3. When the rotor assembly 2 moves, the guide block slides in the guide groove in cooperation with the guide groove to guide the movement of the rotor assembly 2 and prevent the rotor assembly 2 from lateral movement offset.

In other specific embodiments of the present disclosure, the first guide component 41 is configured as a guide block, which is disposed on the base 21 and located between two adjacent sets of permanent magnets 20. The second guide component 42 is configured as a guide groove, which extends along the moving direction of the rotor assembly 2 and is arranged on the stator assembly 1 or the housing 3.

The guiding structure of the present disclosure is disposed in the gap between the stator fixing part and the base 21, effectively utilizing the gaps between the plurality of permanent magnets 20 and the plurality of modules, thereby improving the space utilization rate.

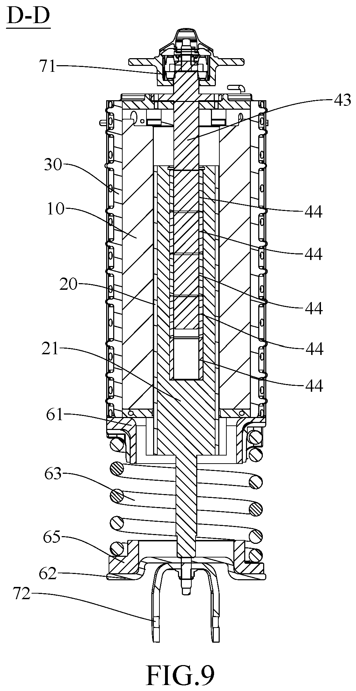

In other embodiments of the present disclosure, as shown in FIG. 7 and FIG.9, the guide assembly 4 further comprises a third guide component 43. The linear motor 100 further comprises a top plate, which is fixedly connected to the top of the housing 3. The third guide component 43 is configured as a guide column, which is connected to the top plate and extends along the axial direction of the housing 3. A guide hole is correspondingly disposed on the base 21. The guide column extends into the guide hole and is in sliding engagement with the guide hole. The rotor assembly 2 can move stably along the guiding direction, preventing the rotor assembly 2 from lateral movement offset due to the impact on the linear motor 100 and improving the movement stability of the rotor assembly 2.

The cooperation between the guide hole and the guide column can also limit the movement of the rotor assembly 2. When the guide column abuts against the bottom wall of the guide hole, the rotor assembly 2 cannot continue to move upward, preventing the rotor assembly 2 from damaging the top due to impact and prolonging the service life of the rotor assembly 2.

In an embodiment, as shown in FIG. 9, the plurality of linear bearings 44 are arranged in the guide hole. The guide column is in sliding engagement with the plurality of linear bearings 44, which improves the movement stability of the rotor assembly 2.

In some embodiments of the present disclosure, the base 21 is provided with a sensor grating, and the housing 3 or the stator assembly 1 of the linear motor 100 is provided with a position sensor 52. During the movement of the rotor assembly 2, the position sensor 52 cooperates with the sensor grating to detect the position of the rotor assembly 2 relative to the stator assembly 1.

It can be understood that the linear motor 100 of the present disclosure is applied to the vibration absorber 200 of a vehicle. The linear motor 100 can actively control the damping force or lifting force of the vibration absorber 200. By detecting the position of the rotor assembly 2 with the position sensor 52, the damping force provided by the linear motor 100 can be clearly obtained.

In some embodiments of the present disclosure, the connecting plate 11 is arranged between any two adjacent stator fixing parts. The sensor grating is disposed on the base 21, and the position sensor 52 is mounted on the connecting plate 11. In other embodiments of the present disclosure, the stator fixing parts are mounted on the housing 3. The sensor grating is arranged on the base 21, and the position sensor 52 is mounted on the housing 3 of the linear motor 100.

In some embodiments of the present disclosure, the sensor grating is disposed on the base 21 and located between two adjacent sets of permanent magnets 20, so that the sensor grating will not interfere with the movement of the rotor assembly 2.

In some specific embodiments of the present disclosure, the number of the mounting surfaces is three, and the orthographic projection of the base 21 in the moving direction of the rotor assembly 2 is an equilateral triangle. The sensor grating is disposed on the base 21 and located between two of the permanent magnets 20. A first guide component 41 is connected to the adjacent position of the remaining permanent magnet 20 on the base 21. The movement stability of the rotor assembly 2 is strong, and the position sensor 52 cooperates with the sensor grating to detect the position of the rotor assembly 2 relative to the stator assembly 1.

In other embodiments of the present disclosure, as shown in FIG. 7 and FIG.10, the base 21 is provided with a sensor magnetic strip 51, and the housing 3 or the stator assembly 1 of the linear motor 100 is provided with a position sensor 52. During the movement of the rotor assembly 2, the position sensor 52 cooperates with the sensor magnetic strip 51. The position sensor 52 detects the position of the rotor assembly 2 relative to the stator assembly 1 by sensing the magnetic field strength of the sensor magnetic strip 51. The sensor magnetic strip 51 is disposed on the base 21 and located between two permanent magnets 20. A first guide component 41 is connected to the adjacent position of the other permanent magnets 20 on the base 21. The sensor of the present disclosure is arranged in the gap between the stator fixing part and the base 21, effectively utilizing the gaps between the plurality of permanent magnets 20 and the plurality of modules, thereby improving the space utilization rate.

The vibration absorber 200 according to some embodiments of the present disclosure comprises the above-mentioned linear motor 100. The stator assembly 1 is adapted to be fixed to the vehicle body, and the rotor assembly 2 is adapted to be fixed to the wheel and is movable relative to the stator assembly 1. The rotor assembly 2 can move towards the wheel and can also move towards the vehicle body.

When the vehicle travels over a bumpy road, the wheels jump upward. Since the rotor assembly 2 is fixed to the wheels, the rotor assembly 2 will also move upward accordingly. At this time, the electromagnetic module 10 is powered, and the stator assembly 1 provides a magnetic field force to slow down the upward movement speed of the rotor assembly 2. That is, the linear motor 100 provides a buffering damping force, thereby buffering the impact force transmitted from the wheels to the vehicle body, reducing the impact vibration, and enhancing the stability and comfort of the vehicle during driving. The linear motor 100 of the present disclosure can also actively control the damping force of the vibration absorber 200. By controlling the magnitude of the damping force, the driving style of the entire vehicle can be controlled. For a comfortable vehicle, the damping force can be adjusted to be smaller; for a handling-oriented vehicle, the damping force can be adjusted to be larger, so as to improve the driving comfort of the vehicle.

The rotor assembly 2 is fixedly connected to the wheels. The rotor assembly 2 can move downward, thereby lifting the entire vehicle to the desired height, adjusting the overall posture of the vehicle, and at the same time increasing the ground clearance of the vehicle, thus improving the vehicle's off-road performance. The vehicle can adapt to more complex road conditions.

According to the vibration absorber 200 of some embodiments of the present disclosure, by installing the above-mentioned linear motor 100, the linear motor 100 can actively control the damping force and lifting force of the vibration absorber 200. When the vehicle travels over a bumpy road and the wheels move upward, the stator assembly 1 provides a magnetic field force to slow down the upward movement speed of the rotor assembly 2. That is, the linear motor 100 provides a buffering damping force, thereby buffering the impact force transmitted from the wheels to the vehicle body, reducing the impact vibration, and improving the stability and comfort of the vehicle during driving. Moreover, the linear motor 100 can provide a lifting force to raise the entire vehicle to the desired height, adjusting the vehicle's posture while increasing the ground clearance, thereby improving the vehicle's off-road performance.

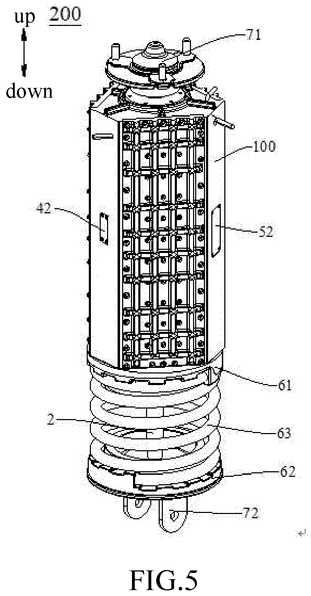

In some embodiments of the present disclosure, as shown in FIG. 1 and FIG. 5, the vibration absorber 200 further comprises an upper mounting seat 61, a lower mounting seat 62, and a damping spring 63. The upper mounting seat 61 is adapted to be fixed to the vehicle body, the lower mounting seat 62 is adapted to be fixed to the wheel, and the two ends of the damping spring 63 are respectively connected to the upper mounting seat 61 and the lower mounting seat 62. The stator assembly 1 is fixedly connected to the upper mounting seat 61, and the rotor assembly 2 is fixedly connected to the lower mounting seat 62. Since the two ends of the damping spring 63 are respectively connected to the upper mounting seat 61 and the lower mounting seat 62, when the rotor assembly 2 moves relative to the stator assembly 1, it can drive the damping spring 63 to stretch or compress, thereby adjusting the damping force of the vibration absorber 200. By controlling the magnitude of the damping force, the driving style of the entire vehicle can be controlled to improve the driving comfort of the vehicle.

The linear motor 100 can control the movement direction of the rotor assembly 2 by controlling the direction of the current. When the current is controlled to make the rotor assembly 2 move downward, compressing the spring mass on the damping spring 63 to the limit, at this time, the thrust of the damping spring 63 reaches the maximum. Then, by changing the direction of the current, the rotor assembly 2 generates the maximum upward thrust. Under the combined influence of the damping spring 63 and the linear motor 100, the spring mass accelerates upward, enabling the vehicle to jump in place, which facilitates passing through some obstacles and improves the passing performance of the vehicle.

In some embodiments of the present disclosure, the stator assembly 1 and the rotor assembly 2 are respectively arranged inside the housing 3. The housing 3 plays a protective role for the stator assembly 1 and the rotor assembly 2, and the stator assembly 1 is fixedly connected to the housing 3. The housing 3 is adapted to be fixed to the vehicle body. The stator assembly 1 is fixed to the vehicle body through the housing 3, and the upper mounting seat 61 is fixed to the bottom of the housing 3, so that the stator assembly 1 is fixedly connected to the upper mounting seat 61. It can be understood that this housing 3 can be the above-mentioned stator fixing part.

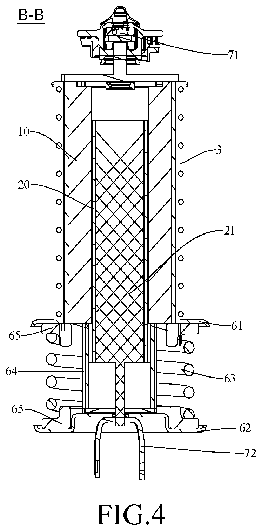

In some embodiments of the present disclosure, the rotor assembly 2 is fixed to the lower mounting seat 62 to move synchronously with it. As shown in FIG. 4, the lower end of the rotor assembly 2 extends out of the first accommodating space and passes through the center of the damping spring 63 to be fixedly connected to the lower mounting seat 62.

In some specific embodiments of the present disclosure, as shown in FIG. 1 and FIG. 5, an upper support of the vibration absorber 71 is arranged at the top of the housing 3. The upper support of the vibration absorber 71 is fixedly connected to the vehicle body through bolts. A lower mounting fork of the vibration absorber 72 is arranged at the bottom of the lower mounting seat 62. The lower mounting fork of the vibration absorber 72 is fixedly connected to the wheel or the suspension arm through a bushing.

In some specific embodiments of the present disclosure, as shown in FIG. 4, the lower end of the rotor assembly 2 passes through the lower mounting seat 62 to be fixedly connected to the lower mounting fork of the vibration absorber 72. The rotor assembly 2 is connected as a whole with the lower mounting seat 62 and the lower mounting fork of the vibration absorber 72. Since the lower mounting fork of the vibration absorber 72 is fixedly connected to the wheel, the rotor assembly 2 is thus fixed to the wheel.

In some embodiments of the present disclosure, the lower end of the housing 3 is provided with a through hole. The rotor assembly 2 can move to make a part of it extend out of the through hole, and the housing 3 will not interfere with the movement of the rotor assembly 2. The lower end of the rotor assembly 2 can extend out of the through hole to be fixedly connected to the mounting seat, so as to move synchronously with the lower mounting seat 62.

In some embodiments of the present disclosure, as shown in FIG. 4, the vibration absorber 200 further comprises a protective cover 64. The protective cover 64 is installed between the upper mounting seat 61 and the lower mounting seat 62. The internal space of the protective cover 64 is in communication with the through hole, and the part of the rotor assembly 2 extending out of the through hole is located inside the protective cover 64. The protective cover 64 plays a protective role for the extended part of the rotor assembly 2, preventing dirt from splashing onto the rotor assembly 2 during the vehicle's driving, and maintaining the cleanliness of the rotor assembly 2, and prolonging the service life of the rotor assembly 2.

In some embodiments of the present disclosure, the protective cover 64 is fixedly installed on the lower mounting seat 62, and the protective cover 64 can extend into the housing 3 from the through hole. When the rotor assembly 2 drives the lower mounting seat 62 to move, the protective cover will not abut against the upper mounting seat 61 to interfere with the movement of the lower mounting seat 62.

In some embodiments of the present disclosure, as shown in FIG. 4 and FIG.9, the upper mounting seat 61 and/or the lower mounting seat 62 are/is provided with a cushion pad 65. The damping spring 63 abuts against the cushion pad 65. The cushion pad 65 can reduce the vibration of the damping spring 63 on the upper mounting seat 61 and/or the lower mounting seat 62. When the damping spring 63 abuts against the cushion pad 65, the cushion pad 65 also plays a limiting role for the damping spring 63, improving the installation stability of the damping spring 63.

In some specific embodiments of the present disclosure, cushion pad 65 is provided on both the upper mounting seat 61 and the lower mounting seat 62. Optionally, the cushion pad 65 is a rubber part.

The vehicle according to some embodiments of the present disclosure comprises a vehicle body, wheels, and a vibration absorber 200. The vibration absorber 200 is the above-mentioned vibration absorber 200. The stator assembly 1 is fixed to the vehicle body, and the rotor assembly 2 is fixed to the wheels.

According to the vehicle of some embodiments of the present disclosure, by installing the above-mentioned vibration absorber 200, it can buffer the impact force transmitted from the wheels to the vehicle body, and reduce the impact vibration, and enhance the driving stability and comfort of the vehicle during driving. By controlling the magnitude of the vibration absorber's 200 damping force, the driving style of the vehicle can be adjusted to enhance driving comfort. In addition, the vibration absorber 200 can provide a lifting force to raise the entire vehicle to the desired height, adjusting the vehicle's posture while increasing the ground clearance, thereby improving the vehicle's off-road performance.

Other components of the linear motor according to some embodiments of the present disclosure, such as the stator fixing part and the stator coil, as well as the operations, are known to those of ordinary skill in the art, and will not be described in detail here.

In the description of this specification, the description of the reference terms "an embodiment", "some embodiments", "an example", "a specific example", "some examples", and the like means that specific features, structures, materials or characteristics described in combination with the embodiment(s) or example(s) are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples.

Although some embodiments of the present disclosure have been shown and described, those skilled in the art should understand that various changes, modifications, replacements and variations may be made to some embodiments without departing from the principles and purposes of the present disclosure. The scope of the present disclosure is defined by the claims and their equivalents.

## Claims

1. A linear motor comprising:
a stator assembly, the stator assembly comprising a plurality of electromagnetic modules, and each electromagnetic module comprising a stator fixing part and a stator coil, the stator coil being connected to the stator fixing part;
a rotor assembly, the rotor assembly comprising a plurality of permanent magnets, and wherein the plurality of permanent magnets and the plurality of electromagnetic modules have one-to-one correspondence and are at intervals, the plurality of electromagnetic modules being connected to form a first accommodating space, and the rotor assembly being movably arranged in the first accommodating space; or
the plurality of permanent magnets being connected to form a second accommodating space, and the stator assembly being arranged in the second accommodating space.

2. The linear motor according to claim 1, wherein the plurality of stator fixing parts are sequentially connected to form the first accommodating space.

3. The linear motor according to claim 2, wherein the stator assembly further comprises a connecting plate, wherein the connecting plate is arranged between at least two adjacent stator fixing parts, and wherein the connecting plate is connected to the stator fixing part to enclose and form the first accommodating space.

4. The linear motor according to claim 3, wherein the plurality of connecting plates are arranged, and the connecting plates are arranged between any two adjacent stator fixing parts.

5. The linear motor according to any one of claims 1 to 4, wherein the stator assembly further comprises a hollow housing, wherein the first accommodating space is formed inside the housing, and wherein the housing is provided with a plurality of mounting parts, wherein each of the plurality of the mounting parts is configured to mount the stator fixing part.

6. The linear motor according to any one of claims 1 to 5, wherein the rotor assembly comprises a base, which has a plurality of mounting surfaces, and wherein each of the mounting surfaces is configured to mount the permanent magnets.

7. The linear motor according to claim 6, wherein the orthographic projection of the base in the moving direction of the rotor assembly is a polygon.

8. The linear motor according to claim 6 or 7, wherein the number of the mounting surfaces is three.

9. The linear motor according to any one of claims 6 to 8, wherein further comprises a guide assembly for guiding the moving direction of the rotor assembly.

10. The linear motor according to claim 9, wherein the guide assembly comprises a first guide component and a second guide component, wherein the first guide component is arranged on the base and located between two adjacent sets of permanent magnets, wherein the second guide component is mounted to the stator assembly or to the housing of the linear motor, and wherein the first guide component and the second guide component are in sliding engagement with each other.

11. The linear motor according to any one of claims 6 to 10, wherein the base is arranged with a sensor grating and the stator assembly is arranged with a position sensor, wherein the position sensor cooperates with the sensor grating to detect the position of the rotor assembly.

12. A vibration absorber comprising the linear motor according to any one of claims 1 to 11, wherein the stator assembly is adapted to be fixed to the vehicle body, and wherein the rotor assembly is adapted to be fixed to the wheel and is movable relative to the stator assembly.

13. The vibration absorber according to claim 12, further comprising an upper mounting seat, a lower mounting seat, and a damping spring, wherein the upper mounting seat is adapted to be fixed to the vehicle body, wherein the lower mounting seat is adapted to be fixed to the wheel, and wherein the two ends of the damping spring are respectively connected to the upper mounting seat and the lower mounting seat.

14. The vibration absorber according to claim 13, further comprising a housing, wherein the stator assembly and the rotor assembly are respectively arranged in the housing, wherein the housing is adapted to be fixed to the vehicle body, and wherein the upper mounting seat is fixed to the bottom of the housing.

15. The vibration absorber according to claim 14, wherein the rotor assembly is fixed to the lower mounting seat to move synchronously with the lower mounting seat.

16. The vibration absorber according to claim 15, wherein the lower end of the housing is provided with a through hole, and wherein the rotor assembly is movable to make a part of it protrude out of the through hole.

17. The vibration absorber according to claim 16, further comprising a protective cover, wherein the protective cover is mounted between the upper mounting seat and the lower mounting seat, wherein the internal space of the protective cover is in communication with the through hole, and wherein the part of the rotor assembly protruding out of the through hole is located within the protective cover.

18. The vibration absorber according to any one of claims 13 to 17, wherein the upper mounting seat and/or the lower mounting seat is provided with a cushion pad, and the damping spring abuts against the cushion pad.

19. A vehicle comprising: a vibration absorber, which is the vibration absorber according to any one of claims 12 to 18.
